# EUROPÄISCHE PATENTSCHRIFT

(11) **EP 1 213 085 B1**
(45) Veröffentlichungstag und Bekanntmachung des Hinweises auf die Patenterteilung: **24.08.2005**
(21) Anmeldenummer: 01890328.6
(22) Anmeldetag: 27.11.2001
(51) Int. Cl.: B23K 11/00, B08B 15/04, B23K 37/08, B08B 5/02, B23K 11/36, B23K 11/30

(54) **Vorrichtung zum Schweissen einer Drahtgittermatte**
Method for welding a wire mesh grid
Procédé de soudage d'un treillis métallique

(30) Priorität: 05.12.2000 AT 20332000
(43) Veröffentlichungstag der Anmeldung: 12.06.2002
(73) Patentinhaber: EVG Entwicklungs- u. Verwertungs- Gesellschaft m.b.H., A-8074 Raaba (AT)
(72) Erfinder: Ritter, Klaus, Dipl.-Ing, A-8042 Graz (AT)
(74) Vertreter: Holzer, Walter

(56) Entgegenhaltungen:
- EP-A- 0 882 538
- FR-A- 2 734 503
- US-A- 3 612 814
- PATENT ABSTRACTS OF JAPAN vol. 013, no. 122 (M-807), 27. März 1989 (1989-03-27) -& JP 63 295091 A (JIDO HOSEI SYST GIJUTSU KENKYU KUMIAI), 1. Dezember 1988 (1988-12-01)
- PATENT ABSTRACTS OF JAPAN vol. 1997, no. 07, 31. Juli 1997 (1997-07-31) -& JP 09 076075 A (AICHI MACH IND CO LTD), 25. März 1997 (1997-03-25)
- PATENT ABSTRACTS OF JAPAN vol. 007, no. 055 (M-198), 5. März 1983 (1983-03-05) -& JP 57 202969 A (IBIDEN CO LTD), 13. Dezember 1982 (1982-12-13)
- PATENT ABSTRACTS OF JAPAN vol. 012, no. 286 (M-727), 5. August 1988 (1988-08-05) -& JP 63 063596 A (AMADA CO LTD), 19. März 1988 (1988-03-19)

## Beschreibung

Die Erfindung betrifft eine Vorrichtung zum Schweißen einer Drahtgittermatte aus einander rechtwinkelig kreuzenden Längs- und Querdrähten, mit oberen und unteren Schweißelektroden und mit einer Einrichtung zum Zuführen von Reinigungsluft (siehe, z.B., FR-A-2 734 503).

Aus der FR-A-2 734 503 A1 ist es bei einem Verfahren zum Herstellen eines Kabelkanals aus geschweißten Gittern bekannt, einander rechtwinkelig kreuzende verzinkte Stahldrähte miteinander zu verschweißen und das Gitter während der Schweißung kontinuierlich zu reinigen, und zwar mit Hilfe von Düsen, die Luft mit hohem Druck ausstoßen. Diese Düsen sind in der Nähe der Schweißelektroden angeordnet. Des weiteren kann mit Hilfe von anderen Düsen ein Entfettungsmittel unter hohem Druck sowie kaltes oder warmes Spülwasser auf die Schweißstellen des Gitters gesprüht werden, um die Schweißstellen zu reinigen und vor allem einen Niederschlag von Schweißrauch bzw. Schweißdämpfen auf dem Gitter zu verhindern. Die Druckschrift offenbart jedoch kein Verfahren bzw. keine Vorrichtung zum Reinigen der Schweißelektroden und zum Absaugen der Reinigungsluft und der mit der Reinigungsluft mitgerissenen Verunreinigungen.

Aus der **EP-A-0 882 538** ist ferner eine Schweißzange zum Punktschweißen von insbesondere verzinkten Blechteilen bekannt, wobei zur Entfernung der entstehenden Rauchgase eine Absaugvorrichtung vorgesehen ist. Hierbei sind unmittelbar an oder in den Schweißzangenarmen ein oder mehrere Absaugkanäle mit einem unmittelbar neben den Schweißelektroden liegenden, insbesondere die Schweißelektroden umgebenden Saugeinlaß vorgesehen. Die Absaugvorrichtung ist bei Stillstand der Punktschweißvorgänge abgeschaltet und wird bei Wiederaufnahme der Punktschweißvorgänge wieder eingeschaltet. Da je Schweißposition zwei Schweißzangenarme vorhanden sind, sind auch je Schweißposition zwei Absaugkanäle vorhanden. Dies ist eine technisch aufwendige Lösung. Die bekannte Lehre ist für eine Vielpunktschweißanlage zum Herstellen von Drahtgittermatten ungeeignet, weil sie einen hohen technischen Aufwand bedeuten würde und vollkommen unklar ist, wie Absaugkanäle an oder gar in den Schweißelektroden anzuordnen sind. Die bekannte Einrichtung hat insbesondere den Nachteil, daß nur speziell angefertigte Elektroden verwendet werden können und daß die Verunreinigungen nicht abgesaugt, sondern in die Schweißlinie geblasen werden.

Bei Einzelplatzschweißstationen ist es schließlich bekannt, den Schweißrauch mit Hilfe von Absaugrüsseln abzusaugen, die im Bereich des Arbeitsplatzes des Schweißers angebracht sind. Eine Reinigung mit Hilfe von Preßluft ist nicht vorgesehen, da die diskontinuierliche Arbeitsweise mit wechselnden, zu verschweißenden Werkstücken dies nicht erfordert.

Aufgabe der Erfindung ist es, die geschilderten Nachteile der bekannten Ausführungen zu vermeiden und eine Vorrichtung der einleitend angegebenen Art zu schaffen, die es ermöglicht, eine sichere und saubere Kontaktierung der Drähte mit den Schweißelektroden zu gewährleisten und beim Schweißen entstehende Verunreinigungen, wie z.B. Abbrand, Schweißrauch, abzusaugen. Die erfindungsgemäße Vorrichtung zeichnet sich dadurch aus, daß zum Reinigen der oberen und unteren Schweißelektroden mit Reinigungsluft eine annähernd parallel zur Längsdrahtebene verlaufende Blaseinrichtung vorgesehen ist, deren Ausblasöffnung möglichst nahe an den Bereich der Schweißpositionen der Längs- und Querdrähte heranreicht, und daß zum Absaugen der Schweißelektroden-Reinigungsluft und der Verunreinigungen eine Absaugeinrichtung mit zumindest einem Absaugstutzen vorgesehen ist, dessen Eintrittsöffnung möglichst nahe in den Bereich der Schweißpositionen reicht.

Vorzugsweise weist die Blaseinrichtung je Schweißposition zumindest ein ortsfestes Blasrohr auf, wobei die Luftzufuhr der Blaseinrichtung steuerbar ist.

Nach einem weiteren Erfindungsmerkmal ist die Ausblasöffnung der Blaseinrichtung schlitzförmig ausgebildet, wobei der Schlitz parallel zu den Arbeitsflächen der Schweißelektroden verläuft.

Bei einer Ausführungsform der Erfindung weist die Absaugeinrichtung je Schweißposition einen Absaugstutzen auf, dessen Eintrittsöffnung im Bereich der Schweißposition beginnt und der in einen allen Absaugstutzen gemeinsamen Absaugkanal mündet, wobei die Absaugeinrichtung eine aus Filter und Ventilator bestehende, steuerbare Absaugeinheit aufweist.

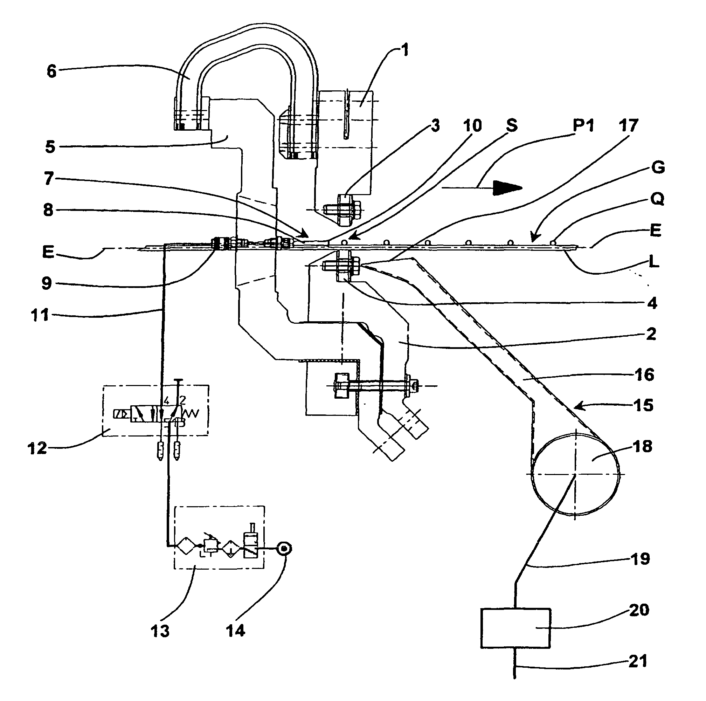

Weitere Merkmale und Vorteile der Erfindung werden nachfolgend an einem Ausführungsbeispiel unter Bezugnahme auf die Zeichnung näher erläutert, die eine schematische Seitenansicht einer erfindungsgemäßen Vorrichtung zeigt.

Die dargestellte Vorrichtung findet Anwendung in einer Widerstands-Gitterschweißanlage zum Herstellen von Drahtgittermatten aus einander rechtwinkelig kreuzenden Längsdrähten L und Querdrähten Q, wobei mehrere Längsdrähte L parallel und gemeinsam mit seitlichem Abstand zueinander entlang der Längsdrahtebene E-E entsprechend der Pfeilrichtung P1 zugeführt und die Querdrähte Q rechtwinkelig zu den Längsdrähten L auf diesen in der Schweißposition S abgelegt und mit den Längsdrähten L verschweißt werden. Die Oberfläche der Drähte L, Q kann glatt oder, wie bei Bewehrungsstählen üblich, eine gerippte Oberfläche aufweisen. Des weiteren können die Oberflächen der Drähte blank oder mit einer Zunderschicht oder mit einer Zinkschicht versehen sein.

Die Vorrichtung weist einen oberen, heb- und senkbaren Elektrodenhalter 1 und einen unteren Elektrodenhalter 2 auf, der unterhalb des oberen Elektrodenhalters 1 und unterhalb der Längsdrahtebene E-E angeordnet und vorzugsweise ortsfest ist. Im Rahmen der Erfindung ist es jedoch auch möglich, den unteren Elektrodenhalter 2 ebenfalls heb- und senkbar auszuführen. Am unteren Ende des oberen Elektrodenhalters 1 ist eine Oberelektrode 3 und am oberen Ende des unteren Elektrodenhalters 2 eine Unterelektrode 4 angeordnet. Die Oberelektrode 3 und die Unterelektrode 4 sind scheibenförmig ausgebildet und haben die Form eines Vieleckes, beispielsweise eines Oktaeders. erfindungsgemäß kann die Oberelektrode 3 an ihrem Umfang eine Querdrahtrille aufweisen, die zur Aufnahme des Querdrahtes Q beim Schweißen dient, V-förmig ausgebildet ist und an die Abmessungen des Querdrahtes Q angepasst ist. Auch die Unterelektrode 4 kann im Rahmen der Erfindung an jeder Fläche des Vielecks eine parallel zur Längsdrahtebene E-E verlaufende Längsdrahtrille aufweisen, die zur Aufnahme des Längsdrahtes L beim Schweißen dient, V-förmig ausgebildet ist und an die Abmessungen des Längsdrahtes L angepasst ist. Im Rahmen der Erfindung ist es ferner möglich, auch anders gestaltete Ober- und Unterelektroden, sowie andere an die Querschnittsform der Quer- und Längsdrähte angepasste Formen für die Quer- und Längsdrahtrillen zu verwenden.

Die Stromversorgung des oberen Elektrodenhalters 1 erfolgt mit Hilfe einer Strombrücke 5, die die Längsdrahtebene E-E durchsetzt und im Bereich der Längsdrähte L entsprechende Durchgangsöffnungen für diese aufweist. Die Strombrücke 5 ist mit einem flexiblen Stromband 6 mit dem oberen, beweglichen Elektrodenhalter 1 verbunden.

Die erfindungsgemäße Vorrichtung weist eine Blaseinrichtung 7 auf, die aus zumindest einem annähernd parallel zur Längsdrahtebene E-E verlaufendem Blasrohr 8 besteht und in Produktionsrichtung P1 gesehen vor der Schweißposition S einlaufseitig angeordnet ist. Das Blasrohr 8 ist mit Hilfe einer Befestigung 9 ortsfest an der Strombrücke 5 angeschraubt und reicht mit seiner Ausblasöffnung 10 möglichst nahe an die Schweißposition S heran. Im Rahmen der Erfindung können zwei Blasrohre verwendet werden, die zu beiden Seiten der Strombrücke 5 befestigt sind. Im Rahmen der Erfindung können die Blasrohre auch an einem anderen Teil befestigt werden, der im Bereich der Schweißpositionen vorhanden ist. Die Ausblasöffnung 10 ist derart gestaltet, dass die austretende Reinigungsluft möglich mit hohem Anblasdruck auf die Arbeitsflächen der Schweißelektroden 3; 4 auftrifft. Besonders vorteilhaft sind hierbei ein enger, länglicher Schlitz oder eine kleine, runde Luftdüse. Bei einer schlitzförmigen Ausblasöffnung 10 verläuft der Schlitz parallel zu den Oberflächen der Ober- und Unterelektrode 3; 4.

Die Blaseinrichtung 7 ist über eine Zuleitung 11, ein Steuerventil 12 und eine Wartungseinheit 13 mit einer Luftversorgung 14 verbunden. Als Reinigungsluft wird üblicherweise Pressluft verwendet. Im Rahmen der Erfindung ist es möglich, auch andere technische Gase, wie z.B. Stickstoff zur Reinigung zu verwenden.

An der Auslaufseite der Schweißposition S ist unterhalb der Längsdrahtebene E-E eine Absaugeinrichtung 15 angeordnet, die je Schweißposition S einen Absaugstutzen 16 aufweist. Die Eintrittsöffnung 17 des Absaugstutzens 16 reicht möglichst nahe an die Schweißposition S heran und ist so groß gewählt, dass die von der Blaseinrichtung 7 weggeblasenen Verunreinigungen und die Reinigungsluft sicher aufgesaugt werden können. Die Absaugstutzen 16 verlaufen schräg nach unten und münden in einem gemeinsamen Absaugkanal 18, der quer zur Produktionsrichtung P1 verläuft. Über eine Absaugleitung 19 wird die Abluft von einer aus Filter und Ventilator bestehenden Absaugeinheit 20 aus dem Absaugkanal 18 abgesaugt und die gereinigte Abluft über eine Abluftleitung 21 ins Freie ausgestossen. Im Rahmen der Erfindung ist es möglich, die Absaugstutzen derart zu gestalten, dass nur ein Absaugstutzen verwendet wird, der sich über die gesamte Arbeitsbreite der Gitterschweißanlage erstreckt und in den Absaugkanal mündet. In diesem Fall besteht der Absaugstutzen aus zwei parallelen Blechen, die seitlich verschlossen sind. Im Rahmen der Erfindung können auch vorhandene Abdeckbleche im Bereich der Schweißpositionen, wie z.B. Abdeckbleche der Schweißtransformatoren, derart umgestaltet werden, dass sie als Absaugstutzen fungieren können. Als Filter können alle handelsüblichen Einrichtungen verwendet werden, die in der Lage sind, die Verunreinigungen abzuscheiden, wie z.B. ein Zyklon zur Grobabscheidung von Partikeln und ein nachgeschalteter Feinfilter zum Abscheiden von Staub und Schweißrauch.

Die erfindungsgemäße Vorrichtung arbeitet in folgenden Weisen:

Nach dem Zuführen und Ablegen des Querdrahtes Q auf den Längsdrähten L in der Schweißposition S wird der obere Elektrodenhalter 1 mit der Oberelektrode 3 soweit abgesenkt bis die Oberelektrode 3 auf dem Querdraht Q aufliegt. Kurz vor dem Absenken der Oberelektrode 3 wird die Reinigungsluft und die Absaugung eingeschaltet, wodurch etwaige Verunreinigungen zunächst vor allem von der Unterelektrode 4 und gegebenenfalls von deren Längsdrahtrillen und bei Annäherung der Oberelektrode 3 auch von dieser und gegebenenfalls von deren Querdrahtrillen durch die Reinigungsluft weggeblasen und über den Absaugstutzen 16 abgesaugt werden. Die Luftversorgung und die Absaugung bleibt während des nachfolgenden Schweißvorganges sowie noch einige Zeit nach Beendigung des Schweißvorganges während des Abhebens der Oberelektrode 3 in Betrieb. Dieses Nachblasen ist besonders wichtig, da die Verunreinigungen erst beim Abheben der Oberelektrode 3 und damit Entlasten und geringfügigem Abheben der Längsdrähte L von der Unterelektrode 4 wirkungsvoll weggeblasen und abgesaugt werden können. Im Rahmen der Erfindung ist es auch möglich, die Reinigungsluft wie oben beschrieben zu steuern und die Absaugung ständig während der Betriebszeit der Schweißvorrichtung zu betreiben. Um den Steuerungsaufwand gering zu halten, ist es im Rahmen der Erfindung weiterhin möglich, ständig während der Betriebszeit der Schweißvorrichtung mit Reinigungsluft zu blasen und ständig abzusaugen. Der erhöhte Reinigungsluft- und Energieverbrauch ist hierbei der möglichen Einsparung einer Steuerung wirtschaftlich gegenüber zu stellen.

Je nach Oberflächenbeschaffenheit der Drähte können beim Verschweißen der Drähte Abbrand, Schweißspritzer, Zunderreste, Ziehmittelreste, Zinkdämpfe u.ä. die Oberfläche der Schweißelektroden 3, 4 verschmutzen. Die erfindungsgemäße Vorrichtung hat den Vorteil, dass die Arbeitsflächen der Ober- und Unterelektrode 3, 4 und etwaige Querdraht- und Längsdrahtrillen in den Arbeitsflächen von Verunreinigungen frei gehalten werden und dadurch die Qualität der Schweißverbindung durch das Vermeiden dieser Verunreinigungen gleichmäßig bleibt und außerdem die Standzeit der Elektroden erhöht wird. Durch das gezielte Absaugen der Verunreinigungen und insbesondere des Schweißrauches wird außerdem der gesamte Schweißbereich der Schweißanlage sauber gehalten.

## Patentansprüche

1. Vorrichtung zum Schweißen einer Drahtgittermatte aus einander rechtwinkelig kreuzenden Längs- und Querdrähten, mit oberen und unteren Schweißelektroden und mit einer Einrichtung zum Zuführen von Reinigungsluft, **dadurch gekennzeichnet, daß** zum Reinigen der oberen und unteren Schweißelektroden (3; 4) mit Reinigungsluft eine annähernd parallel zur Längsdrahtebene (E-E) verlaufende Blaseinrichtung (7; 8) vorgesehen ist, deren Ausblasöffnung (10) möglichst nahe an den Bereich der Schweißpositionen (S) der Längs- und Querdrähte (L; Q) heranreicht, und daß zum Absaugen der Schweißelektroden-Reinigungsluft und der Verunreinigungen eine Absaugeinrichtung (15) mit zumindest einem Absaugstutzen (16) vorgesehen ist, dessen Eintrittsöffnung (17) möglichst nahe an den Bereich der Schweißpositionen (S) heranreicht.

2. Vorrichtung nach Anspruch 1, **dadurch gekennzeichnet, daß** die Blaseinrichtung je Schweißposition (S) zumindest ein ortsfest angeordnetes Blasrohr (8) aufweist, wobei die Luftzufuhr der Blaseinrichtung steuerbar ist.

3. Vorrichtung nach Anspruch 1 oder 2, **dadurch gekennzeichnet, daß** die Ausblasöffnung (10) der Blaseinrichtung schlitzförmig ausgebildet ist, wobei der Schlitz parallel zu den Arbeitsflächen der Schweißelektroden (3; 4) verläuft.

4. Vorrichtung nach Anspruch 1 oder 2, **dadurch gekennzeichnet, daß** die Ausblasöffnung (10) als runde Luftdüse ausgebildet ist.

5. Vorrichtung nach einem der Ansprüche 1 bis 4, **dadurch gekennzeichnet, daß** die Absaugeinrichtung (15) je Schweißposition (S) einen Absaugstutzen (16) aufweist, dessen Eintrittsöffnung (17) im Bereich der Schweißposition (S) beginnt und der in einen allen Absaugstutzen (16) gemeinsamen Absaugkanal (17) mündet, wobei die Absaugeinrichtung (15) eine aus Filter und Ventilator bestehende steuerbare Absaugeinheit (19) aufweist.

6. Vorrichtung nach einem der Ansprüche 1 bis 5, **dadurch gekennzeichnet, daß** als Reinigungsluft Preßluft verwendet wird.

7. Vorrichtung nach einem der Ansprüche 1 bis 6, **dadurch gekennzeichnet, daß** die Reinigungsluft während der Betriebszeit der Schweißvorrichtung ständig zuführbar und absaugbar ist.

8. Vorrichtung nach einem der Ansprüche 1 bis 6, **dadurch gekennzeichnet, daß** die Zufuhr der Reinigungsluft und deren Absaugung derart gesteuert sind, daß die Zufuhr und die Absaugung vor dem Verschweißen der Drähte (Q, L) beginnt, während der Schweißung andauert und nach dem Abheben der Schweißelektrode (3; 4) endet.

9. Vorrichtung nach Anspruch 7, **dadurch gekennzeichnet, daß** die Absaugung während der Betriebszeit der Schweißvorrichtung ständig in Betrieb ist.

## Claims

1. Device for welding a wire lattice mat composed of longitudinal and transverse wires intersecting one another at right angles having upper and lower welding electrodes and having a facility for supplying cleaning air, **characterised in that** for cleaning the upper and lower welding electrodes (3; 4) with cleaning air a blowing device (7; 8) running approximately parallel to the plane of the longitudinal wires (E-E) is provided whose discharge opening (10) extends as close as possible to the region of the welding position (S) of the longitudinal and transverse wires (L; Q) and that for extracting the welding electrode cleaning air and the impurities an extraction device (15) having at least one extraction nozzle (16) is provided whose inlet opening (17) extends as close as possible to the region of the welding position (S).

2. Device according to claim 1, **characterised in that** for each welding position (S) the blowing device has at least one blowing pipe (8) arranged in fixed position, whereby the air supply of the blowing device is controllable.

3. Device according to claim 1 or 2, **characterised in that** the discharge opening (10) of the blowing device is of slit-shaped construction, wherein the slit runs parallel to the working surfaces of the welding electrodes (3; 4).

4. Device according to claim 1 or 2, **characterised in that** the discharge opening (10) is constructed as a round air nozzle.

5. Device according to one of claims 1 to 4, **characterised in that** for each welding position (S) the extraction device (15) has an extraction nozzle (16) whose inlet opening (17) begins in the region of the welding position (S) and runs into in extraction channel (17) common to all extraction nozzles (16), wherein the extraction device (15) comprises a controllable extraction unit (19) consisting of a filter and fan.

6. Device according to one of claims 1 to 5, **characterised in that** for the cleaning air compressed air is used.

7. Device according to one of claims 1 to 6, **characterised in that** during the operating time of the welding device the cleaning air is constantly suppliable and extractable.

8. Device according to one of claims 1 to 6, **characterised in that** the supply of the cleaning air and the extraction thereof are controlled, that the supply and the extraction begins prior to welding of the wires (Q, L), continues during welding and ends after the welding electrode (3; 4) is lifted off.

9. Device according to claim 7, **characterised in that** extraction is constantly in operation during the operating time of the welding device.

## Revendications

1. Dispositif pour le soudage d'un treillis métallique constitué de fils longitudinaux et transversaux se croisant entre eux à angle droit, avec des électrodes de soudage supérieure et inférieure et avec un système pour l'amenée d'air de nettoyage, **caractérisé en ce que** pour le nettoyage des électrodes de soudage supérieure et inférieure (3 ; 4) avec de l'air de nettoyage, il est prévu un système de soufflage (7 ; 8) s'étendant parallèlement au plan des fils longitudinaux (E-E), système de soufflage dont l'ouverture de soufflage (10) est située aussi près que possible de la zone des positions de soudage (S) des fils longitudinaux et transversaux (L ;Q), et **en ce que** pour l'aspiration de l'air de nettoyage des électrodes de soudage et des impuretés, il est prévu un système d'aspiration (15) avec au moins une tubulure d'aspiration (16), dont l'ouverture d'entrée (17) se situe aussi près que possible de la zone des positions de soudage (S).

2. Dispositif selon la revendication 1, **caractérisé en ce que** le système d'aspiration présente par position de soudage respective (S) au moins un tube de soufflage (8) disposé à demeure, dans lequel l'amenée d'air au système de soufflage peut être commandée.

3. Dispositif selon la revendication 1 ou 2, **caractérisé en ce que** l'ouverture de soufflage (10) du système de soufflage est conçue en forme de fente, dans lequel la fente s'étend parallèlement aux faces de travail des électrodes de soudage (3 ;4).

4. Dispositif selon la revendication 1 ou 2, **caractérisé en ce que** l'ouverture de soufflage (10) est conçue sous la forme d'une tuyère d'air ronde.

5. Dispositif selon l'une des revendications 1 à 4, **caractérisé en ce que** le dispositif d'aspiration (15) présente par position de soudage respective (S) une tubulure d'aspiration (16), dont l'ouverture d'entrée (17) commence dans la zone de la position de soudage (S) et qui débouche dans un canal d'aspiration commun à toutes les tubulures d'aspiration (16), dans lequel le système d'aspiration (15) présente une unité d'aspiration (19) pouvant être commandée et consistant en un filtre et en un ventilateur.

6. Dispositif selon l'une des revendications 1 à 5, **caractérisé en ce que** comme air de nettoyage, on utilise de l'air comprimé.

7. Dispositif selon l'une des revendications 1 à 6, **caractérisé en ce que** l'air de nettoyage peut être amené et aspiré de façon constante pendant la durée de fonctionnement du dispositif de soudage.

8. Dispositif selon l'une des revendications 1 à 6, **caractérisé en ce que** l'amenée de l'air de nettoyage et son aspiration sont commandées de telle sorte que l'amenée et l'aspiration commencent avant le soudage des fils (Q, L), se poursuivent pendant le soudage et s'achèvent après le décollage de l'électrode de soudage (3 ; 4).

9. Dispositif selon la revendication 7, **caractérisé en ce que** pendant la durée de fonctionnement du dispositif de soudage, l'aspiration est constamment en service.
